# EUROPÄISCHE PATENTSCHRIFT

(11) **EP 2 871 735 B1**
(45) Veröffentlichungstag und Bekanntmachung des Hinweises auf die Patenterteilung: **10.03.2021**
(21) Anmeldenummer: 13192379.9
(22) Anmeldetag: 11.11.2013
(51) Int. Cl.: H02G 1/12

(54) **Vorrichtung zum Entfernen des zentralen Füllers eines Kabels mit mindestens zwei Leitern**
Apparatus for the removal of the central core of a cable with at least two conductors
Dispositif permettant de retirer le remplissage central d'un câble avec au moins deux conducteurs

(43) Veröffentlichungstag der Anmeldung: 13.05.2015
(73) Patentinhaber: Schleuniger AG, 3608 Thun (CH)
(72) Erfinder: Wosinski, Eugen, 8808 Pfäffikon (CH); Messina, Carmelo, 6340 Baar (CH); Meierhans, Ivo, 6005 Luzern (CH)
(74) Vertreter: Patentbüro Paul Rosenich AG

(56) Entgegenhaltungen:
- DE-A1- 1 918 467
- JP-A- H04 232 905
- JP-A- H04 257 802
- JP-U- H03 117 322
- US-A- 2 089 774
- US-A- 3 720 973
- US-A1- 2013 283 612

## Beschreibung

Die Erfindung betrifft eine Vorrichtung zum Entfernen des zentralen Füllers eines Kabels mit mindestens zwei Leitern, umfassend vorzugsweise eine Halteanordnung/Klemmvorrichtung zum Klemmen des abgemantelten und vorzugsweise mit einer Stützhülse versehenen Kabels mit freigelegten Leitern, vorzugsweise mit einer Zentriereinrichtung, und einer allenfalls als Modul einer übergeordneten Anlagensteuerung ausgebildeten Sensor- und Steuereinrichtung, nach dem Oberbegriff des Anspruchs 1.

Die Bearbeitung von mehradrigen Kabeln, die insbesondere mit einem Schirmgeflecht und einer äusseren Ummantelung, allenfalls auch mit einer die Adern umhüllenden Folie und/oder einem zentralen Füller, versehen sind, umfasst zumindest einen der Verfahrensschritte Ablängen, Abmanteln der Leitung, Kürzen und Zurückstülpen des Schirms, Entfernen der Folie und Entfernen des innenliegenden Füllers.

Dabei stellen insbesondere HSD (High Speed Data)-Produkte sehr hohe Anforderungen an den Verarbeitungsprozess. So ist es derzeit noch nicht möglich, HSD-Kabel komplett vollautomatisch zu bearbeiten. Aktuell werden die Verarbeitungsschritte abmanteln, Schirmgeflecht schneiden und zurückstülpen, Folie sowie Füller entfernen manuell oder halbautomatisch auf einzelnen Stationen durchgeführt. Erst die weitere Verarbeitung erfolgt dann auf einem Vollautomaten. Auch der Bearbeitungsschritt des Schneidens des Schirms wird derzeit bestenfalls halbautomatisch durchgeführt.

Die US2013/0283612A1 offenbart eine Vorrichtung zur Anschluss-Behandlung für ein Koaxialkabel, das ein Kernelement enthält, in dem ein Innenleiter mit einem Isolator bedeckt ist, ein Außenleiter um das Kernelement vorgesehen ist und aus einer Vielzahl von Drähten ausgebildet ist, und eine Ummantelung einen äußeren Umfang des Außenleiters bedeckt. Dabei erfolgt ein Verzweigen des Kernelementes und des Außenleiters voneinander an einem Anschluss des Koaxialkabels, umfassend das Freilegen des Außenleiters durch Entfernen der Ummantelung an einem Endbereich des Koaxialkabels, Trennen der Drähte des Außenleiters von einer äußeren Umfangsfläche des Kernelementes durch Greifen und Bewegen eines Endbereichs des Außenleiters, um den freigelegten Bereich des Außenleiters zu lockern, Auspressen des Kernelementes mit dem Innenleiter aus Lücken, die in den Drähten des Außenleiters ausgebildet sind, um das Kernelement vom Außenleiter herauszuziehen, und Verdrillen des Außenleiters durch Greifen und Verdrillen des Endbereichs des Außenleiters nach dem Schritt des Herauspressens.

Die JPH04257802A hingegen hat eine Vorrichtung zur Entfernung von Schichten eines optischen Kabels zum Gegenstand. Herkömmlich geschnittene Lagen des Kabels werden mittels einer Saugeinrichtung entfernt.

Aufgabe der vorliegenden Erfindung ist es somit, eine Vorrichtung für die Integration in eine vollautomatische Anlage zur Kabelbearbeitung, insbesondere für HSD-Produkte, auszugestalten. Damit soll auch die Verbindung eines Vollautomaten für die Verarbeitung von zumindest an einem Ende vorbereiteten Kabeln mit der möglichst auch vollautomatischen Anlage zur Kabelvorbearbeitung ermöglicht werden.

Die Aufgabe wird durch die Merkmale des unabhängigen Anspruchs gelöst. Vorteilhafte Weiterbildungen sind in den Figuren und in den abhängigen Patentansprüchen dargelegt.

Gemäss der Erfindung weist eine Bearbeitungseinrichtung
- zumindest zwei bewegbare Greifer, wobei ein erster Greifer zum Ergreifen eines ersten Leiters und/oder ersten Leiterpaares des Kabels und ein zweiter Greifer zum Ergreifen eines zweiten Leiters und/oder zweiten Leiterpaares des Kabels (3) ausgebildet ist, sodass der zentrale Füller des Kabels durch die bewegbaren Greifer freistellbar ist, sowie
- eine gesonderte Abtrenneinrichtung zur Abtrennung des durch die Greifer freigestellten zentralen Füllers
auf.

Die Bearbeitungseinrichtung kann somit für jeden Leiter und/oder jedes Leiterpaar des Kabels zumindest einen bewegbaren Greifer für je einen Leiter und/oder je ein Leiterpaar aufweisen. Damit ist eine vollautomatische Freistellung des zentralen Füllers mit nachfolgender Abtrennung dieses Kabelelementes ohne weiteren manuellen Eingriff möglich.

Erfindungsgemäß ist jeder Greifer in seinem den Leiter bzw. das Leiterpaar haltenden Zustand um eine im Wesentlichen quer zur Kabelachse orientierte Achse, vorzugsweise um einen Winkel von etwa 90°, wegschwenkbar. Vorzugsweise liegt diese Achse axial in Höhe des vorderen Endes der verbliebenen Umhüllungselement der Leiter, womit die optimale Zugänglichkeit des zentralen Füllers möglichst nahe dem noch ummantelten Bereich des Kabels gewährleistet ist.

Bevorzugt ist zum Richten der Leiterenden vor den weiteren Schritten des Bearbeitungsprozesses weiters vorgesehen, dass die Steuereinrichtung dazu ausgelegt ist, nach Ergreifen der Leiter durch die Greifer und noch vor dem Verschwenken der Greifer eine axiale Relativbewegung zwischen Kabel und Greifern durchzuführen, die vorzugsweise vom Kabel weg führt.

Vorzugsweise ist die Abtrenneinrichtung in Richtung der verschwenkbaren bzw. verschwenkten Greifer axial verfahrbar, um sie in die optimale Position zum Entfernen des Füllers möglichst nahe beim ummantelten Kabel zu bringen.

Eine weitere Ausführungsform der Erfindung ist für ein sicheres und rasches Durchtrennen des Füllers dadurch gekennzeichnet, dass die Abtrenneinrichtung zwei Schneiden vorzugsweise in zangenförmiger Anordnung aufweist.

Vorzugsweise liegen die beiden Schneiden in je einer Ebene, wobei die beiden Ebenen miteinander einen - gegebenenfalls während der Annäherung veränderlichen - Winkel von zumindest etwa 90° oder kleiner einschliessen. Damit reichen die Schneiden der Abtrenneinrichtung noch weiter zwischen die weggebogenen Leiterenden des abgemantelten Bereichs des Kabels hinein, um den Füller noch näher zum noch ummantelten Bereich des Kabels abtrennen zu können.

Gemäss einer anderen Ausführungsform der Erfindung ist auf der dem Kabel abgewandten Seite der Greifer bzw. der Abtrenneinrichtung eine Absaugvorrichtung vorgesehen, um alle abgetrennten Teile rasch und sicher aus dem Arbeitsbereich der Vorrichtung abzutransportieren.

Eine wieder andere Ausführungsform der Erfindung ist dadurch gekennzeichnet, dass die Steuereinrichtung ausgelegt ist, um nach Abtrennung des Füllers die Greifer in die Ausgangsstellung beim Ergreifen der Leiter zurückzuschwenken sind und anschliessend alle Greifer von den Leitern zu lösen und in eine vom Kabel zurückgezogene Anfangsstellung zu bringen. Dieser vordefinierte Ablauf bringt die Leiterenden automatisch wieder zurück in eine für die weitere Verarbeitung vorgesehene Position mit im Wesentlichen parallel zur Achse des Kabels ausgerichteten Leiterenden.

Vorzugsweise ist die Steuereinrichtung ausgelegt, um nach Abtrennen des Füllers einen Teil der Greifer in die Ausgangsstellung beim Ergreifen der Leiter zurückzuschwenken ist und anschliessend alle Greifer von den Leitern zu lösen und in die vom Kabel zurückgezogene Anfangsstellung zu bringen, so dass einen Teil der Leiter im Wesentlichen wieder axial ausgerichtet wird, ein anderer Teil der Leiter in der weggebogenen Position verbleibt, wenn dies für die weitere Bearbeitung notwendig oder vorteilhaft ist. Diese definierten Positionen können beliebig gewählt und durch die Steuereinrichtung automatisch eingerichtet werden.

Die Erfindung betrifft auch ein Verfahren zum Entfernen des zentralen Füllers eines Kabels mit mindestens zwei Leitern, gemäß Anspruch 6. Ausführungsformen des Verfahrens sind in den Ansprüchen 7 bis 10 enthalten.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine beispielhafte Ausführungsform einer erfindungsgemässen Vorrichtung mit zur Bearbeitung antransportiertem Kabel vor Beginn der eigentlichen Bearbeitung,
- Fig. 2: die Vorrichtung der Fig. 1 mit in der Vorrichtung geklemmtem Kabel und bereits auf die Leiterenden zugefahrenen Greifern,
- Fig. 3: die Vorrichtung der Fig. 1 und 2 in einer nachfolgenden Position im Bearbeitungsprozess, in welcher die Halteanordnung/Klemmvorrichtung wieder gelöst wurde, um die nachfolgenden Bearbeitungsschritte zu gestatten,
- Fig. 4: die Vorrichtung der Fig. 1 bis 3 in der Position mit verschwenkten Greifern und Leiterenden sowie mit freigelegtem Füller,
- Fig. 5: die Vorrichtung der Fig. 1 bis 4 mit herangefahrender Abtrennvorrichtung für die Füllern, noch mit geöffneten Schneiden, und
- Fig. 6: die Vorrichtung der Fig. 1 bis 5 mit geschlossenen, den zentralen Füller zwischen den umgebogenen Abschnitten der weggeschwenkten Leiterenden durchtrennenden Schneiden.

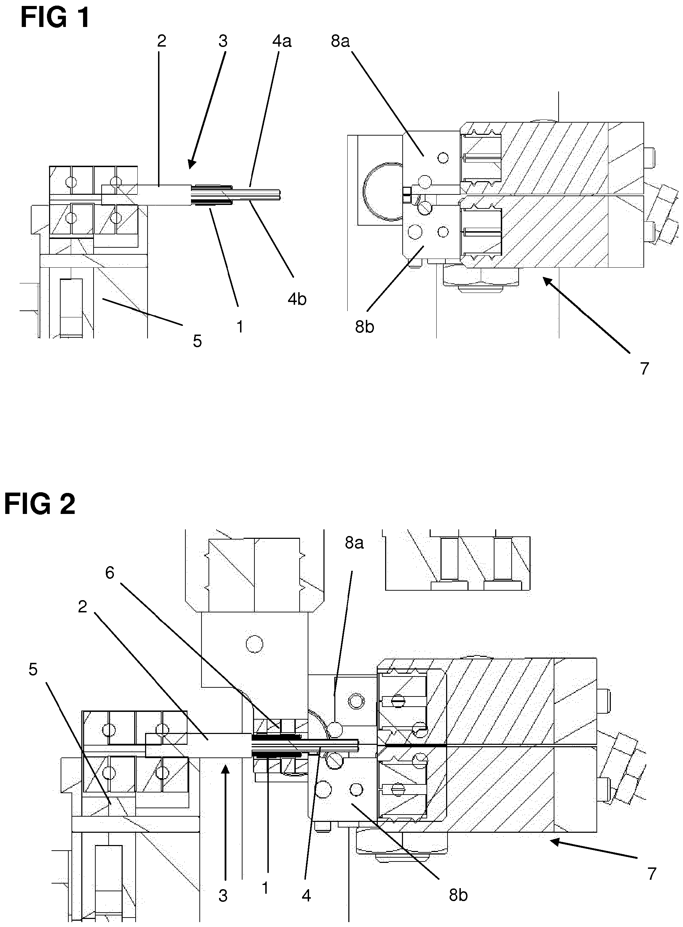

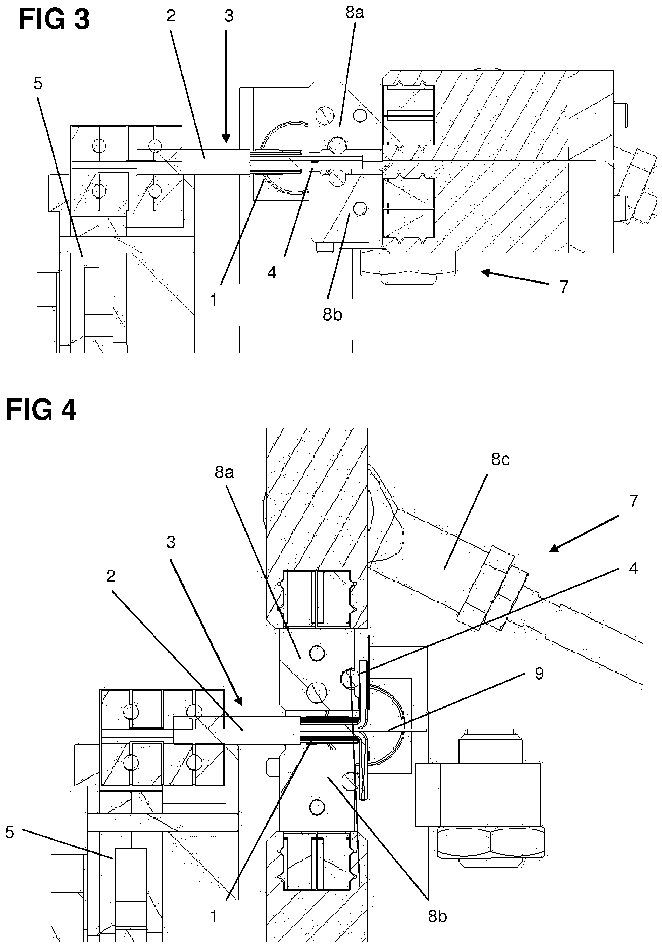

Das in Fig. 1 dargestellte Ausführungsbeispiel einer erfindungsgemässen Vorrichtung zum Entfernen des zentralen Füllers 9 (erst ab der Fig. 4 ff zu erkennen) eines Kabels 3 mit mindestens zwei inneren Leitern 4 oder Litzen weist vorzugsweise eine Halteanordnung/Klemmvorrichtung 6 zum Klemmen des abgemantelten und vorzugsweise mit einer Stützhülse versehenen Kabels 3 mit freigelegten Leitern 4 auf. Damit kann eine hohe Positionierungsgenauigkeit gewährleistet werden, um das Kabel 3 für den Bearbeitungskopf in einer genau definierten Lage zu halten. Allenfalls kann noch eine weitere Zentriereinrichtung vorgesehen sein, wenn die Zentrierung und Lagedefinition durch die Halteanordnung/Klemmvorrichtung 6 nicht ausreichen sollte.

Wie in Fig. 1 zu sehen ist, weist der Bearbeitungskopf 7 für jeden Leiter 4 und/oder jedes Leiterpaar des Kabels 3 zumindest einen bewegbaren Greifer 8a, 8b auf. Bei vier inneren Leitern 4 ist ein Greiferpaar 8a, 8b vorgesehen, wobei die beiden oberen Leiter 4a durch den oberen Greifer 8a und die beiden unteren Leiter 4b durch den unteren Greifer 8b ergriffen werden können, sobald die Greifer 8a, 8b aus der vom Kabel 3 beabstandeten Position der Fig. 1 im Wesentlichen axial an das zu bearbeitende Ende des Kabels 3 und damit an die Halteanordnung/Klemmeinrichtung 6 bzw. die Transportpalette 5 angenähert werden, wie in Fig. 2 dargestellt ist.

Diese Annäherung kann durch eine beliebige Relativbewegung von Transportpalette 5, Halteanordnung/Klemmeinrichtung 6 bzw. Kabel 3 und Bearbeitungskopf 7 erfolgen, welche Bewegung durch eine Sensor- und Steuereinrichtung für die Vorrichtung bewerkstelligt werden kann, welche Einrichtung auch als Modul einer übergeordneten Anlagensteuerung realisiert sein könnte. Gesteuert werden diese Bewegungen sowie auch alle anderen noch weiter unten beschriebenen Abläufe durch deren Implementierung in der Steuereinrichtung beispielsweise in Form eines darin lauffähigen Computerprogrammproduktes oder einer Mikroprozessorsteuerung.

In Fig. 3 ist eine Zwischenstellung der erfindungsgemässen Vorrichtung dargestellt, in der nach Ergreifen der Leiter 4 durch die Greifer 8a, 8b die Halteanordnung/Klemmvorrichtung 6 wieder gelöst und vom Kabel 3 entfernt wird. Das Kabel 3 ist in axialer Richtung nur mehr durch die Transportpalette 5 gehalten und am Ende des zu bearbeitenden Abschnittes durch die Greifer 8a, 8b. Optional kann als weiterer Bearbeitungsschritt beim Prozess zur Entfernung des Füllers 9 ein Richten der Enden der Leiter 4 erfolgen, wozu vorzugsweise in der Steuereinrichtung ein Ablauf implementiert ist, mit welchem nach dem Ergreifen der Leiter 4 durch die Greifer 8a, 8b und noch vor weiteren Bearbeitungsschritten eine axiale Relativbewegung zwischen Kabel 3 - und damit auch zumindest zwischen der Transportpalette 5 - und Bearbeitungskopf 7 bewerkstelligt wird, die die Greifer 8a, 8b vom Kabel 3 bzw. der Transportpalette 5 weg führt.

Anschliessend wird über entsprechende Betätigungseinrichtungen 8c (nur für den oberen Greifer 8a dargestellt) und über einen in der Steuereinrichtung der Vorrichtung implementierten Ablauf gesteuert, jeder Greifer 8a, 8b in seinem den Leiter 4 bzw. das Leiterpaar haltenden Zustand um eine im Wesentlichen quer zur Kabelachse orientierte Achse verschwenkt (siehe dazu Fig. 4). Da die Achse für diese vorzugsweise um einen Winkel von etwa 90° erfolgende Verschwenkung vorzugsweise axial in Höhe des vorderen Endes der verbliebenen Umhüllungselemente 1, 2 der Leiter 4 liegt. In axialer Richtung des Kabels 3 verbleibt somit allein der Füller 9, der durch das vorteilhafterweise 90-gradige Wegschwenken der Leiter 4 optimal für die Abtrennung zugänglich gemacht wird.

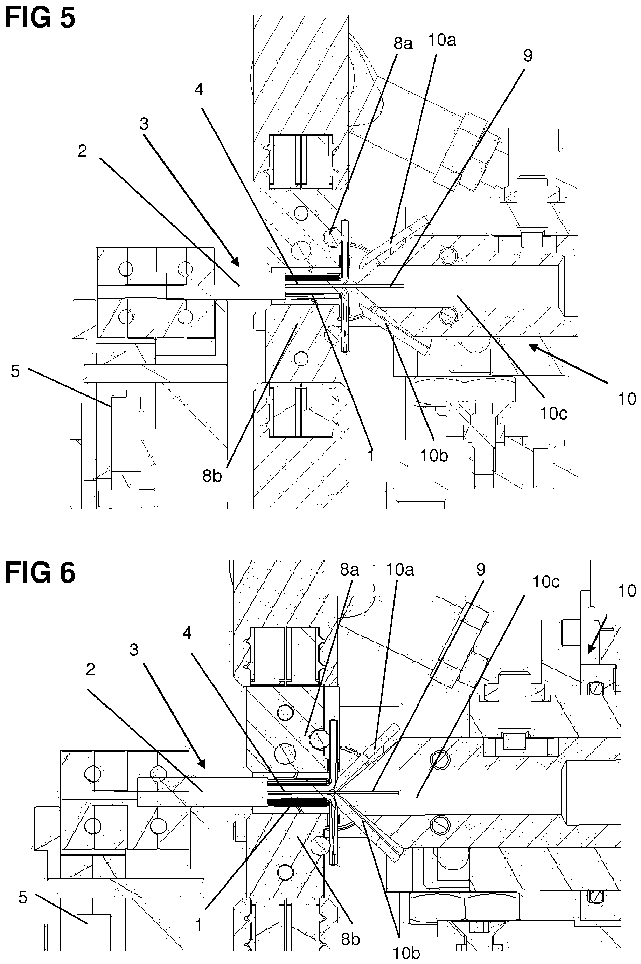

Dazu wird - wie in der Fig. 5 gut zu erkennen ist - eine gesonderte Abtrenneinrichtung 10 für den zentralen Füller 9 axial auf das Kabel 3 hin bewegt, was vorzugsweise durch Verfahren der Abtrenneinrichtung 10 erfolgt, selbstverständlich aber prinzipiell durch eine beliebige Relativbewegung von Kabel 3 und/oder Transportpalette 5 und Abtrenneinrichtung 10 bewirkt werden kann, wenn sie nur die Abtrenneinrichtung 10 möglichst nahe zum oder sogar in den Biegebereich der Leiter 4 bringt.

Die Abtrenneinrichtung 10 weist bevorzugt zwei Schneiden 10a, 10b auf, die vorzugsweise in zangenförmiger Anordnung vorliegen. Die Ebenen, in welchen die Schneiden 10a, 10b jeweils liegen, schliessen für eine spitz zulaufende Vorderseite der Abtrenneinrichtung 10 miteinander einen Winkel von zumindest etwa 90° oder kleiner ein. Dieser Winkel kann sich gegebenenfalls während der Annäherung verändern, typischerweise etwas vergrössern. Damit reichen die Schneiden 10a, 10b der Abtrenneinrichtung 10 aber in jedem Fall - und wie in Fig. 6 klar zu sehen ist - weit zwischen die weggebogenen Leiterenden des abgemantelten Bereichs des Kabels 3 hinein, um den Füller 9 ganz nahe beim noch mit der Ummantelung 2 versehenen Bereich des Kabels 3 abtrennen zu können.

Die abgetrennten Stücke des Füllers 9 werden vorzugsweise über eine Absaugvorrichtung mit Absaugöffnung 10c in der Abtrenneinrichtung 10 rasch und sicher aus dem Arbeitsbereich entfernt.

In der Steuereinrichtung kann ein an die Entfernung des Füllers 9 folgender weiterer Ablauf für eine weitere optionale Ergänzung des oben erläuterten Bearbeitungsprozesses implementiert sein. Gemäss diesem weiteren Ablauf werden nach Abtrennung des Füllers 9 die Greifer 8a, 8b in die Ausgangsstellung beim Ergreifen der Leiter 4 zurückgeschwenkt. Danach erst werden die Greifer 8a, 8b von den Leitern 4 gelöst und können dann in eine vom Kabel 3 zurückgezogene Anfangsstellung gebracht werden. Alternativ kann gemäss einem anderen optionalen Ablauf über Steuerung durch die Steuereinrichtung nach Abtrennen des Füllers 9 nur einer der Greifer 8a, 8b, vorzugsweise der untere Greifer 8b, in die Ausgangsstellung beim Ergreifen der Leiter 4 zurückschwenken. Der vorzugsweise obere Greifer 8a verbleibt in der verschwenkten Position und gibt bei Lösen der Greifer 8a, 8b von den Leitern 4 den oberen Leiter oder das obere Leiterpaar 4a in der verschwenkten Stellung frei. Damit verbleiben die Leiterpaare 4a, 4b in einer für die weitere Bearbeitung definierten Position. Diese definierte Position kann im Prinzip beliebig gewählt und durch die Steuereinrichtung automatisch eingerichtet werden.

Nach Beendigung aller oben erläuterten Abläufe wird allenfalls die Haltevorrichtung/Klemmeinrichtung 6 wieder geöffnet und das Kabel 3 kann durch die Transportpalette 5 wieder abtransportiert, vorzugsweise zu einer nachfolgenden Bearbeitungsstation angeliefert, werden.

Besonders vorteilhaft ist die Verwendung der erfindungsgemässen Vorrichtung in einer Anlage zur Bearbeitung eines mehradrigen Kabels, insbesondere für HSD-Produkte. Die Vorrichtung kann dabei als eine von mehreren vollautomatischen Bearbeitungsstationen vorgesehen sein, die neben dem Öffnen und Aufstellen des Schirms auch noch das Abmanteln, das Kürzen und Zurückstülpen des Schirms und das Entfernen einer allfälligen Folie bewerkstelligen. Für den vollautomatischen Betrieb ist weiters noch eine Transportvorrichtung zum Transport von abgelängten Kabeln von und zu den Stationen sowie zu einer vorzugsweise ebenfalls vollautomatischen Verarbeitungsanlage vorgesehen.

### Bezugszeichenliste

- 1: Schirm
- 2: Ummantelung
- 3: Kabel
- 4: Innere Leiter, Litzen
- 5: Transportpalette
- 6: Halteanordnung/Klemmvorrichtung
- 7: Bearbeitungskopf
- 8a, 8b: Greifer
- 9: Füller
- 10: Abtrennvorrichtung für Füller
- 10a,: Schneiden
- 10b 10c: Absaugöffnung

## Patentansprüche

1. Vorrichtung zum Entfernen des zentralen Füllers (9) eines Kabels (3) mit mindestens zwei Leitern (4), umfassend vorzugsweise eine Halteanordnung/Klemmvorrichtung (6) zum Klemmen des abgemantelten und vorzugsweise mit einer Stützhülse versehenen Kabels (3) mit freigelegten Leitern (4), vorzugsweise mit einer Zentriereinrichtung, und einer allenfalls als Modul einer übergeordneten Anlagensteuerung ausgebildeten Sensor- und Steuereinrichtung, wobei eine Bearbeitungseinrichtung (7)
- zumindest zwei bewegbare Greifer (8a, 8b), wobei ein erster Greifer (8a) zum Ergreifen eines ersten Leiters (4) und/oder ersten Leiterpaares (4a) des Kabels (3) und ein zweiter Greifer (8b) zum Ergreifen eines zweiten Leiters (4) und/oder zweiten Leiterpaares (4b) des Kabels (3) ausgebildet ist, sodass der zentrale Füller (9) des Kabels (3) durch die bewegbaren Greifer (8a, 8b) freistellbar ist, sowie
- eine gesonderte Abtrenneinrichtung (10) zur Abtrennung des durch die Greifer (8a, 8b) freigestellten zentralen Füllers (9) des Kabels (3)
aufweist, **dadurch gekennzeichnet, dass** jeder Greifer (8a, 8b) in seinem den Leiter (4) bzw. das Leiterpaar (4a, 4b) haltenden Zustand um eine im Wesentlichen quer zur Kabelachse orientierte Achse, vorzugsweise um einen Winkel von etwa 90°, wegschwenkbar ist.

2. Vorrichtung nach Anspruch 1, **dadurch gekennzeichnet, dass** die Abtrenneinrichtung (10) in Richtung der verschwenkbaren bzw. verschwenkten Greifer (8a, 8b) axial verfahrbar ist.

3. Vorrichtung nach Anspruch 1 oder 2, **dadurch gekennzeichnet, dass** die Abtrenneinrichtung (10) zwei Schneiden (10a, 10b) vorzugsweise in zangenförmiger Anordnung aufweist.

4. Vorrichtung nach Anspruch 3, **dadurch gekennzeichnet, dass** die beiden Schneiden (10a, 10b) in je einer Ebene liegen, wobei die beiden Ebenen miteinander einen Winkel von zumindest etwa 90° oder kleiner einschliessen.

5. Vorrichtung nach einem der vorhergehenden Ansprüche, **dadurch gekennzeichnet, dass** auf einer dem Kabel (3) abgewandten Seite der Greifer (8a, 8b) bzw. der Abtrenneinrichtung (10) eine Absaugvorrichtung (10c) vorgesehen ist.

6. Verfahren zum Entfernen des zentralen Füllers (9) eines Kabels (3) mit mindestens zwei Leitern (4), mittels einer Vorrichtung umfassend vorzugsweise eine Halteanordnung/Klemmvorrichtung (6) zum Klemmen des abgemantelten und vorzugsweise mit einer Stützhülse versehenen Kabels (3) mit freigelegten Leitern (4), vorzugsweise mit einer Zentriereinrichtung, und einer allenfalls als Modul einer übergeordneten Anlagensteuerung ausgebildeten Sensor- und Steuereinrichtung, wobei eine Bearbeitungseinrichtung (7) der Vorrichtung für jeden Leiter (4) und/oder jedes Leiterpaar (4a, 4b) des Kabels (3) zumindest einen bewegbaren Greifer (8a, 8b) für je einen Leiter (4) und/oder je ein Leiterpaar (4a, 4b) sowie eine gesonderte Abtrenneinrichtung (10) für den zentralen Füller (9) aufweist, wobei der zentrale Füller (9) des Kabels (3) durch die bewegbaren Greifer (8a, 8b) freigestellt wird, indem die Leiterenden durch die Greifer (8a, 8b) weggeschwenkt werden, und die Abtrenneinrichtung (10) den durch die Greifer (8a, 8b) freigestellten zentralen Füller (9) abtrennt.

7. Verfahren nach Anspruch 6, **dadurch gekennzeichnet, dass** die Vorrichtung nach einem der Ansprüche 1 bis 5 ausgebildet ist.

8. Verfahren nach Anspruch 6 oder 7, **dadurch gekennzeichnet, dass** mit einem in der Steuereinrichtung implementiertem Ablauf nach Ergreifen der Leiter (4, 4a, 4b) durch die Greifer (8a, 8b) und noch vor dem Verschwenken der Greifer (8a, 8b) eine axiale Relativbewegung zwischen Kabel (3) und Greifern (8a, 8b) durchgeführt wird, die vorzugsweise vom Kabel (3) weg führt.

9. Verfahren nach einem der Ansprüche 6 bis 8, **dadurch gekennzeichnet, dass** mittels einem in der Steuereinrichtung implementierten zweiten Ablauf nach Abtrennung des Füllers (9) die Greifer (8a, 8b) in die Ausgangsstellung beim Ergreifen der Leiter (4, 4a, 4b) zurückgeschwenkt werden und anschliessend alle Greifer (8a, 8b) von den Leitern (4, 4a, 4b) gelöst werden und in eine vom Kabel (3) zurückgezogene Anfangsstellung gebracht werden.

10. Verfahren nach einem der Ansprüche 6 bis 9, **dadurch gekennzeichnet, dass** mittels einem in der Steuereinrichtung implementierten dritten Ablauf nach Abtrennen des Füllers (9) ein Teil der Greifer in die Ausgangsstellung beim Ergreifen der Leiter (4, 4a, 4b) zurückgeschwenkt werden und anschliessend alle Greifer (8a, 8b) von den Leitern (4, 4a, 4b) gelöst und in die vom Kabel (3) zurückgezogene Anfangsstellung gebracht werden, und somit ein Teil der Leiter (4, 4a, 4b) in der aus der Achse des Kabels (3) weggebogenen Position verbleibt.

## Claims

1. An apparatus for the removal of the central core (9) of a cable (3) with at least two conductors (4), preferably comprising a holding arrangement/clamping apparatus (6) for clamping the stripped cable (3) which has exposed conductors (4) and which is preferably provided with a support sleeve, preferably with a centring device and a sensor and control device which is configured if required as a module of a higher-level system controller, wherein a processing device (7) has
- at least two movable grippers (8a, 8b), wherein a first gripper (8a) is configured for gripping a first conductor (4) and/or first conductor pair (4a) of the cable (3) and a second gripper (8b) is configured for gripping a second conductor (4) and/or second conductor pair (4b) of the cable (3), so that the central core (9) of the cable (3) is able to be exposed by the movable grippers (8a, 8b), and
- a dedicated cutting device (10) for cutting the central core (9) of the cable (3) exposed by the grippers (8a, 8b),
**characterised in that** each gripper (8a, 8b) in its state holding the conductor (4) and/or the conductor pair (4a, 4b) is preferably able to be pivoted away about an axis oriented substantially transversely to the cable axis, by an angle of approximately 90°.

2. The apparatus according to Claim 1, **characterised in that** the cutting device (10) is axially movable in the direction of the pivotable and/or pivoted grippers (8a, 8b) .

3. The apparatus according to Claim 1 or 2, **characterised in that** the cutting device (10) has two cutters (10a, 10b) preferably in a pincer-shaped arrangement.

4. The apparatus according to Claim 3, **characterised in that** the two cutters (10a, 10b) are respectively located in one plane, wherein the two planes enclose with one another an angle of at least approximately 90° or less.

5. The apparatus according to one of the preceding claims, **characterised in that** a suctioning apparatus (10c) is provided on a side of the grippers (8a, 8b) and/or the cutting device (10) remote from the cable (3).

6. A method for the removal of the central core (9) of a cable (3) with at least two conductors (4), by means of an apparatus preferably comprising a holding arrangement/clamping apparatus (6) for clamping the stripped cable (3) which has exposed conductors (4) and which is preferably provided with a support sleeve, preferably with a centring device and a sensor and control device which is configured if required as a module of a higher-level system controller, wherein a processing device (7) of the apparatus for each conductor (4) and/or each conductor pair (4a, 4b) of the cable (3) has at least one movable gripper (8a, 8b) for one respective conductor (4) and/or one respective conductor pair (4a, 4b), and a dedicated cutting device (10) for the central core (9), wherein the central core (9) of the cable (3) is exposed by the movable grippers (8a, 8b), by the conductor ends being pivoted away by the grippers (8a, 8b) and the cutting device (10) cutting the central core (9) exposed by the grippers (8a, 8b).

7. The method according to Claim 6, **characterised in that** the apparatus is configured according to one of Claims 1 to 5.

8. The method according to Claim 6 or 7, **characterised in that** an axial relative movement between the cable (3) and grippers (8a, 8b), which preferably leads away from the cable (3), is performed by a sequence implemented in the control device after the conductors (4, 4a, 4b) have been gripped by the grippers (8a, 8b) and even before the pivoting of the grippers (8a, 8b).

9. The method according to one of Claims 6 to 8, **characterised in that** by means of a second sequence implemented in the control device, after cutting the core (9) the grippers (8a, 8b) are pivoted back into the initial position gripping the conductors (4, 4a, 4b) and subsequently all of the grippers (8a, 8b) are released from the conductors (4, 4a, 4b) and moved into an initial position retracted from the cable (3).

10. The method according to one of Claims 6 to 9, **characterised in that** by means of a third sequence implemented in the control device, after cutting the core (9) a portion of the grippers are pivoted back into the initial position gripping the conductors (4, 4a, 4b) and subsequently all of the grippers (8a, 8b) are released from the conductors (4, 4a, 4b) and moved into the initial position retracted from the cable (3) and thus a portion of the conductors (4, 4a, 4b) remains in the position bent away from the axis of the cable (3) .

## Revendications

1. Dispositif, destiné à retirer le remplissage central (9) d'un câble (3) pourvu d'au moins deux conducteurs (4), comprenant de préférence un ensemble de retenue/un dispositif de serrage (6), destiné à serrer le câble (3) dénudé et muni de préférence d'une douille d'appui, avec des conducteurs (4) mis à nu, pourvu de préférence d'un système de centrage et d'un système de capteurs et de commande conçu, le cas échéant, sous la forme d'un module d'un système directeur d'installation, un système d'usinage (7) comportant
- au moins deux grappins (8a, 8b) mobiles, un premier grappin (8a) étant conçu pour saisir un premier conducteur (4) et/ou une première paire de conducteurs (4a) du câble (3) et un deuxième grappin (8b) étant conçu pour saisir un deuxième conducteur (4) et/ou une deuxième paire de conducteurs (4b) du câble (3), de telle sorte que le remplissage central (9) du câble (3) puisse être mis à nu par les grappins (8a, 8b) mobiles, ainsi
- qu'un système de sectionnement (10) séparé, destiné à sectionner le remplissage central (9) du câble (3), mis à nu par les grappins (8a, 8b),
**caractérisé en ce que** dans son état de maintien du conducteur (4) ou de la paire de conducteurs (4a, 4b), chaque grappin (8a, 8b) est susceptible d'être pivoté en éloignement autour d'un axe orienté sensiblement à la transversale de l'axe de câble, de préférence d'un angle d'environ 90°.

2. Dispositif selon la revendication 1, **caractérisé en ce que** le système de sectionnement (10) est susceptible d'être déplacé axialement, en direction des grappins (8a, 8b) pivotés ou susceptibles d'être pivotés.

3. Dispositif selon la revendication 1 ou 2, **caractérisé en ce que** le système de sectionnement (10) comporte deux tranchants (10a, 10b) disposés de préférence en forme de pinces.

4. Dispositif selon la revendication 3, **caractérisé en ce que** les deux tranchants (10a, 10b) se situent dans respectivement un plan, les deux plans incluant entre eux un angle d'au moins 90° ou inférieur.

5. Dispositif selon l'une quelconque des revendications précédentes, **caractérisé en ce que** sur un côté des grappins (8a, 8b) ou du système de sectionnement (10) opposé au câble (3) est prévu un dispositif d'aspiration (10c).

6. Procédé, destiné à retirer le remplissage central (9) d'un câble (3) pourvu d'au moins deux conducteurs (4) au moyen d'un dispositif comprenant de préférence un ensemble de retenue/un dispositif de serrage (6) destiné à serrer le câble (3) dénudé et muni de préférence d'une douille d'appui, avec des conducteurs (4) mis à nu, pourvu de préférence d'un système de centrage et d'un système de capteurs et de commande conçu, le cas échéant sous la forme d'un module d'un système directeur d'installation, un système d'usinage (7) du dispositif comportant pour chaque conducteur (4) et/ou pour chaque paire de conducteurs (4a, 4b) du câble (3) au moins un grappin (8a, 8b) mobile pour chaque fois un conducteur (4) et/ou pour chaque fois une paire de conducteurs (4a, 4b), ainsi qu'un système de sectionnement (10) séparé pour le remplissage central (9), le remplissage central (9) du câble (3) étant dénudé par les grappins (8a, 8b) mobiles, en ce que les extrémités des conducteurs sont pivotées en éloignement par les grappins (8a, 8b) et le système de sectionnement (10) sectionne le remplissage (9) dénudé par les grappins (8a, 8b).

7. Procédé selon la revendication 6, **caractérisé en ce que** le dispositif est conçu selon l'une quelconque des revendications 1 à 5.

8. Procédé selon la revendication 6 ou 7, **caractérisé en ce qu**'avec un cycle implémenté dans le système de commande, une fois que les conducteurs (4, 4a, 4b) ont été saisis par les grappins (8a, 8b) et encore avant le pivotement des grappins (8a, 8b), un déplacement axial relatif entre le câble (3) et les grappins (8a, 8b) qui éloigne de préférence du câble (3) est réalisé.

9. Procédé selon l'une quelconque des revendications 6 à 8, **caractérisé en ce qu**'au moyen d'un deuxième cycle implémenté dans le système de commande, après le sectionnement du remplissage (9), les grappins (8a, 8b) sont repivotés dans la position initiale lors du saisissement des conducteurs (4, 4a, 4b), et en ce qu'ensuite, tous les grappins (8a, 8b) sont désolidarisés des conducteurs (4, 4a, 4b) et sont amenés dans une position de départ en retrait par rapport au câble (3).

10. Procédé selon l'une quelconque des revendications 6 à 9, **caractérisé en ce qu**'au moyen d'un troisième cycle implémenté dans le système de commande, après le sectionnement du remplissage (9) une partie des grappins est amenée dans la position initiale lors du saisissement des conducteurs (4, 4a, 4b) en en ce qu'ensuite, tous les grappins (8a, 8b) sont désolidarisés des conducteurs (4, 4a, 4b) et sont amenés dans la position de départ en retrait par rapport au câble (3), et ainsi une partie des conducteurs (4, 4a, 4b) reste dans la position courbée en éloignement de l'axe du câble (3).
